(19) Europäisches Patentamt / European Patent Office / Office européen des brevets

(11) **EP 3 122 547 B1**

(12) **FASCICULE DE BREVET EUROPEEN**

(45) Date de publication et mention de la délivrance du brevet:
**04.07.2018 Bulletin 2018/27**

(21) Numéro de dépôt: **15713797.7**

(22) Date de dépôt: **27.02.2015**

(51) Int Cl.:
**B29D 30/06** (2006.01)   **B29C 33/00** (2006.01)

(86) Numéro de dépôt international:
**PCT/FR2015/050472**

(87) Numéro de publication internationale:
**WO 2015/145005 (01.10.2015 Gazette 2015/39)**

(54) **MODÈLE DE PRÉDICTION DE DÉMOULABILITÉ SURFACIQUE**

MODELL FÜR DIE VORHERSAGE DER OBERFLÄCHENENTFORMBARKEIT

SURFACE DEMOULDABILITY PREDICTION MODEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.03.2014 FR 1452448**

(43) Date de publication de la demande:
**01.02.2017 Bulletin 2017/05**

(73) Titulaire: **Compagnie Générale des Etablissements Michelin**
**63000 Clermont-Ferrand (FR)**

(72) Inventeur: **VILLENEUVE, Bernard**
**F-63040 Clermont-Ferrand Cedex 9 (FR)**

(74) Mandataire: **Demaure, Pierre-Yves**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**JP-A- 2012 006 287    JP-A- 2012 096 462**

**Description**

La présente invention se rapporte à un procédé d'évaluation de l'effort de démoulage d'un pneu d'un moule donné et plus particulièrement une méthode de prédiction de la démoulabilité de nouvelles sculptures.

Les nouvelles gammes de pneumatiques doivent répondre à un cahier des charges fonctionnel basé sur des performances telles que l'adhérence, la résistance au roulement, le bruit ... Mais, ces nouvelles gammes doivent aussi avoir un impact le faible possible sur le coût de fabrication des pneus.

Le coût de fabrication comprend à la fois les matières premières utilisées, le coût façon pour réaliser les enveloppes crues qui constituerons le pneu et le coût façon du poste cuisson (temps nécessaire à la vulcanisation de l'enveloppe crue et temps nécessaire à l'ouverture du moule de cuisson), et plus le temps nécessaire à l'ouverture de la presse dans laquelle est placée le moule, est long, moins il reste de temps pour cuire les enveloppes crues. Dans les cas extrêmes, il est impossible de démouler l'enveloppe après cuisson.

Les nouvelles sculptures des pneus sont de plus en plus complexes ce qui augmente le temps de démoulage. Pouvoir anticiper la démoulabilité de ces nouvelles sculptures évite de mettre sur le marché des solutions trop consommatrices de temps post cuisson et donc trop onéreuses. Ainsi, il existe un besoin d'avoir un outil prédictif qui éviterait de réaliser des moules de cuissons dont l'utilisation en usine ne serait pas, d'un point de vue industriel, acceptable.

Il est possible de réaliser un moule de cuisson comportant la nouvelle sculpture et de mesurer les efforts nécessaires pour contrecarrer l'adhérence générée entre ce moule de cuisson et l'enveloppe crue lors de la phase de cuisson. Pour pouvoir appréhender la démoulabilité de nouvelles sculptures, il est possible de réaliser des portions de moule avec les différentes sculptures à évaluer et de mesurer, grâce à un axe dynamométrique monté sur chaque portion différente, les efforts nécessaires pour vaincre l'adhérence générée lors de la cuisson pour chaque solution. Cependant, l'inconvénient majeur de cette solution est qu'il faut réaliser l'équivalent d'un moule complet ce qui représente un coût assez élevé pour une méthode exploratoire.

Le savoir faire des opérationnels peut être mis à contribution, mais ceci a pour conséquences que des contraintes subjectives (basées sur le ressenti et non pas sur l'expérimental) risquent de pénaliser fortement la définition de nouvelles sculptures et donc avoir un effet négatif sur les performances recherchées.

Le document JP 2012096462 - A décrit un procédé pour mesurer l'effort de glissement d'un modèle de secteur de moule pour pneumatique. Toutefois, dans ce document il n'y a aucune référence au problème de démoulage d'un pneu vulcanisé et à l'évaluation des efforts nécessaires pour contrecarrer l'adhérence générée entre le moule de cuisson et le pneumatique vulcanisé.

On connait du brevet JP 2012 006 287 une méthode et un moyen permettant, à partir d'une portion d'éléments de sculpture, d'appréhender les efforts nécessaires à la démoulabilité d'éléments de sculpture plus conséquents tout en limitant le coût. Ce brevet décrit une méthode utilisant une « éprouvette », ou échantillon de moule, représentative d'une partie de la sculpture choisie dans la zone la plus contraignante du moule complet et à mesurer les efforts nécessaires pour vaincre l'adhérence générée sur l'éprouvette pour ensuite la transposer à des pièces de tailles plus grandes.

Cependant, l'adhérence de l'enveloppe crue sur le moule qui apparait lors de la phase de cuisson est tributaire d'un nombre important de paramètres qui sont difficiles à appréhender dans leurs globalités. Si l'aspect géométrique de la sculpture : dimensionnel et géométrie intrusive, est partiellement pris en compte dans cet état de la technique, il est nécessaire de réaliser un nouvel échantillon de moule lorsque l'on change de surface moulante du moule parce qu'on déploie dimensionnement une sculpture pour un panel de véhicule donné ou que l'on change de sculpture.

En effet, on constate qu'à iso-sculpture et iso-matériau, le déploiement dimensionnel a un impact non négligeable sur la surface en contact entre l'enveloppe à cuire et le moule de cuisson. Cette variation impactera directement les efforts liés à l'adhérence.

Par expérience, à iso matériau et iso sculpture, l'évolution des efforts liés à l'adhérence ne suit pas les mêmes proportions que l'évolution de la surface en contact. Ainsi, en doublant la surface en contact, on ne double pas les efforts liés à l'adhérence.

Une solution consiste à réaliser plusieurs moules de cuisson pour différentes dimensions de pneumatiques d'une même gamme et de mesurer les efforts liés à l'adhérence. Sans réaliser toutes les dimensions, il serait ainsi possible de définir une loi d'évolution des efforts de démoulage pour une gamme donnée. Mais cette méthode nécessite de réaliser plusieurs moule ce qui peut vite devenir très onéreux.

L'objet de la présente invention est de proposer une solution à la fois simple et précise en appréhendant de façon analytique l'impact surfacique sur l'adhérence post cuisson pour, à travers des mesures sur des éprouvettes, évaluer la démoulabilité de nouvelles dimensions.

Le procédé d'évaluation d'un effort de démoulage d'un pneu d'un moule selon l'invention comme défini dans la revendication 1, consiste à mesurer un effort de démoulage et une surface moulante d'un moule témoin et de deux échantillons, ledit procédé comportant :

- une étape de choix du moule témoin,
- une étape de calcul de la surface $S_1$ moulante du moule témoin,
- une étape de mesure de l'effort $F_1$ de démoulage du moule témoin,
- une étape de détermination d'une première éprouvette témoin avec une surface moulante $S_0$,
- une étape de détermination d'une deuxième éprouvette témoin avec une surface moulante $S'_0$, $S'_0$ étant différent de $S_0$,
- une étape de mesure de l'effort $F_0$ de démoulage de la première éprouvette témoin,
- une étape de mesure de l'effort $F'_0$ de démoulage de la deuxième éprouvette témoin,
- une étape de calcul du rapport de la surface moulante $S_0$ de la première éprouvette et $S'_0$ de la deuxième éprouvette pour définir un ratio surfacique éprouvette $R_{se}$
- une étape de calcul du rapport de l'effort $F_0$ de démoulage de la première éprouvette et $F'_0$ de la deuxième éprouvette pour définir un ratio effort éprouvette $R_{fe}$
- une étape de sélection d'un moule à mesurer,
- une étape de calcul de la surface moulante $S_m$ du moule à mesurer,
- une étape de calcul de l'effort $F_m$ de démoulage du moule à mesurer tel que $F_m = F_1 \times S_m/S_1 \times R_{fe}/R_{se}$.

On appelle surface moulante la surface de contact entre le moule et l'enveloppe du pneu.

Lors du développement d'une nouvelle sculpture, une dimension témoin de pneu sera choisie pour réaliser des enveloppes tests, par exemple celui du véhicule particulier. Cette dimension témoin servira à déterminer un moule témoin. Des mesures d'efforts réels seront faites lors de la fabrication de ces pneus à partir de ce moule témoin. En connaissant l'étendue dimensionnelle de la gamme, il est possible avec un outil de CAO de mesurer pour chaque dimension de pneu, la surface de contact de l'enveloppe avec le moule. Les éprouvettes sont utilisées de façon analytique pour définir, pour un matériau donné, une loi d'évolution des efforts liés à l'adhérence par rapport à la surface en contact. Cette loi d'évolution permet ensuite d'extrapoler les mesures d'efforts connus pour la dimension de l'enveloppes test aux autres dimensions de la gamme. La détermination d'un « coefficient de démoulabilité surfacique » permet d'extrapoler la capacité de démoulabilité du nouveau moule correspondant à une autre dimension de la gamme. Les mesures sont faites avec un matériau de référence.

Selon une caractéristique particulière, la surface moulante $S'_0$ de la deuxième éprouvette est supérieure à la surface moulante $S_0$ de la première éprouvette. La première éprouvette sera alors l'éprouvette de référence à partir de laquelle on calculera les efforts de démoulage.

De façon complémentaire, le procédé comprend :

- une étape de détermination de l'effort $M_0$ de démoulage du matériau de référence d'une éprouvette matériau,
- une étape de sélection d'un matériau à mesurer,
- une étape de détermination de l'effort M de démoulage du matériau de l'éprouvette matériau,
- une étape de calcul du rapport des efforts $M_0$ de démoulage du matériau de référence et M du matériau de l'éprouvette matériau pour définir un coefficient C d'impact matériau,
- une étape de calcul de l'effort F de démoulage du matériau tel que $F = C \times F_0$.

L'éprouvette matériau sera de forme très simple.

Il est ainsi possible de prendre en compte le paramètre matériau et de mesurer ainsi l'impact matériau sur le démoulage.

L'invention concerne également un dispositif de sélection de la surface moulante d'un moule comme défini dans la revendication 4, le dispositif comprenant un moule témoin, une première et une deuxième éprouvette, un dispositif de mesure d'effort et un moyen de calcul et qui utilise un procédé ayant au moins une des caractéristiques ci-dessus. Les éprouvettes témoins sont de forme relativement simple mais avec des surfaces de contact différentes.

L'objet de l'invention est aussi un programme d'ordinateur pour la sélection de la surface moulante d'un moule comme défini dans la revendication 5, le programme comprenant les instructions suivantes :

- une étape de choix du moule témoin,
- une étape de mesure de l'effort $F_1$ de démoulage du moule témoin,
- une étape de calcul de la surface $S_1$ moulante du moule témoin,
- une étape de détermination d'une première éprouvette témoin avec une surface moulante $S_0$,
- une étape de détermination d'une deuxième éprouvette témoin avec une surface moulante $S'_0$, $S'_0$ étant différent de $S_0$,
- une étape de mesure de l'effort $F_0$ de démoulage de la première éprouvette témoin,
- une étape de mesure de l'effort $F'_0$ de démoulage de la deuxième éprouvette témoin,
- une étape de calcul du rapport de la surface moulante $S_0$ de la première éprouvette et $S'_0$ de la deuxième éprouvette pour définir un ratio surfacique éprouvette $R_{se}$,
- une étape de calcul du rapport de l'effort $F'_0$ de démoulage de la première éprouvette et $F'_0$ de la deuxième éprouvette pour définir un ratio effort éprouvette $R_{fe}$,
- une étape de sélection d'un moule à mesurer,
- une étape de calcul de la surface moulante $S_m$ du moule à mesurer,
- une étape de calcul de l'effort $F_m$ de démoulage du moule à mesurer tel que $F_m = F_1 \times Sm/S_1 \times R_{fe}/R_{se}$.

D'autres avantages pourront encore apparaître à l'homme du métier à la lecture des exemples ci-dessous, illustrés par les figures annexées, donnés à titre d'exemple :

- La figure 1 représente un organigramme des étapes du procédé d'évaluation de l'effort de démoulage d'un pneu selon l'invention,
- Les figures 2 et 3 sont des vues en perspective d'une première et d'une deuxième éprouvette,
- La figure 4 un dispositif de sélection selon l'invention,
- La figure 5 représente un organigramme d'étapes complémentaires du procédé.

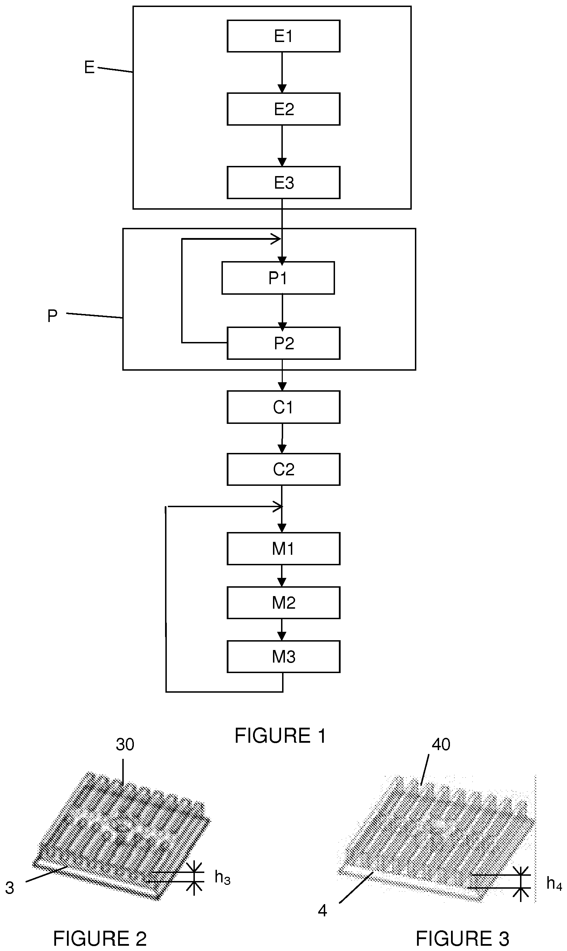

La figure 1 montre l'organigramme des étapes du procédé d'évaluation de l'effort de démoulage d'un pneu d'un moule.

Le procédé comporte une étape E de détermination de la surface $S_1$ moulante et de détermination de l'effort $F_1$ de démoulage d'un moule témoin. Cette étape E comprend une sous étape E1 de détermination d'un moule témoin, une sous étape E2 de calcul de la surface moulante $S_1$, une sous étape E3 de mesure de l'effort $F_1$ de démoulage du moule témoin.

Le procédé comporte une deuxième étape P de détermination de la surface moulante et de l'effort de démoulage d'éprouvettes témoins. Cette étape se décompose en une sous étape P1 de détermination d'une éprouvette témoin avec une surface moulante $S_0$, une sous étape P2 de mesure de l'effort $F_0$ de démoulage de l'éprouvette témoin. Cette étape P nécessite une deuxième mesure pour déterminer l'effort $F'_0$ de démoulage d'une deuxième éprouvette avec une surface moulante $S'_0$.

Le procédé comporte ensuite une première étape C1 de définition du ratio surfacique $R_{se}$ par le calcul du rapport de la surface moulante $S_0$ de la première éprouvette et $S'_0$ de la deuxième éprouvette pour définir un ratio surfacique éprouvette $R_{se}$ et une seconde étape C2 de définition du ratio d'effort éprouvette $R_{fe}$ par le calcul du rapport de l'effort $F'_0$ de démoulage de la première éprouvette et $F'_0$ de la deuxième éprouvette pour définir un ratio effort éprouvette $R_{fe}$.

On sélectionne ensuite dans une étape M1 un moule à mesurer, puis une étape M2 de calcul de la surface moulante $S_m$ du moule à mesurer, et une étape M3 de calcul de l'effort $F_m$ de démoulage du moule à mesurer tel que $F_m = F_1 \times S_m/S_1 \times R_{fe}/R_{se}$.

Les éprouvettes pourront, par exemple, présenter un profil comme illustré figures 2 et 3. L'éprouvette 3 illustrée figure 2 présente des rainures 30 relativement simples, ici rectilignes et parallèles, d'une profondeur $h_3$ et l'éprouvette 4 illustrée figure 3 avec des rainures 40 de profondeur $h_4$ plus grande que $h_3$. Le surface de moulage de l'éprouvette 4 est donc plus grande que la surface de moulage de l'éprouvette 3. Ces éprouvettes comportent uniquement des surfaces horizontales et verticales car l'objectif est de mesurer l'impact surfacique et non géométrique. De plus ces éprouvettes doivent permettre de mesurer les efforts en traction généré par les profils du pneu et en cisaillement généré par les cordons ou rainures. L'impact surfacique est obtenu en utilisant deux éprouvettes 3 et 4 dont on connait exactement la surface en contact de chacune. Les écarts mesurés entre les efforts de démoulage de chaque éprouvette 3 et 4 permettent de corréler les efforts à l'impact surfacique. Les mesures sont réalisées avec les mêmes matériaux que ceux utilisés pour la fabrication des enveloppes tests et avec le moule témoin.

Le tableau suivant montre des exemples de valeurs d'effort et de surfaces de moulante de deux éprouvettes :

| Eprouvettes analytiques surfaciques | éprouvette 3 | éprouvette 4 |
|---|---|---|
| Efforts de démoulage surfacique (en daN) | 410 | 445 |
| Surface éprouvette (en mm$^2$) | 25 504 | 31 883 |
| Ratio surfacique éprouvette ($R_{se}$) | 1 | 1.250 |
| Ratio effort éprouvette ($R_{fe}$) | 1 | 1.085 |

Pour cet exemple, cela signifie que pour un mélange donné, 25% de surface en contact en plus (de l'éprouvette 4 par rapport à l'éprouvette 3) génère 8.5% d'efforts de démoulage supplémentaires.

Par le procédé on va mesurer la surface en contact du moule témoin 2 et des différentes variantes de moule à mesurer 8 et calculer le ratio surfacique entre le moule témoin 2 et les variantes à évaluer : moule 81 et moule 82.

|  | Dimension moule témoin | Dim moule 81 | Dim moule 82 |
|---|---|---|---|
| Surface moulante (en mm$^2$) | 531 525 | 657 997 | 779 559 |
| Ratio surfacique moule | 1 | 1.238 | 1.467 |

A partir de la loi d'évolution des efforts d'impact surfacique, 25% de surface en contact génère 8.5% d'efforts de démoulage supplémentaires, et des ratios surfacique moules ci-dessus, nous pouvons déterminer le coefficient de démoulabilité surfacique suivant la formule ci-dessous:

$$\text{Coefficient démoulabilité surfacique} = (\text{ratio surfacique moule}/R_{se}) \times R_{fe}$$

Soit dans l'exemple ci dessus:

$$\text{Coefficient démoulabilité surfacique} = (\text{ratio surfacique moule}/1.250) \times 1.085,$$

soit :

|  | Dim moule 81 | Dim moule 82 |
|---|---|---|
| Coefficient démoulabilité surfacique | 1.075 | 1.273 |

Sur l'exemple ci-dessus, nous pouvons observer que sur le moule 82, la surface en contact est majorée de 46.7% par rapport au moule témoin et que les efforts induits sont plus importants de 27.3%.

A partir du coefficient démoulabilité surfacique et de la mesure des efforts d'un moule de témoin ou test, on peut appréhender les efforts de démoulage pour une nouvelle dimension. Cette analyse permet ainsi plus facilement de définir les moyens de production à mettre en oeuvre (type et puissance de la presse de cuisson, revêtement, ...) pour garantir la fabrication de chaque dimension d'une gamme de pneumatique. Pour chaque nouvelle gamme on choisir une nouvelle enveloppe témoin et donc un moule témoin et on peut recalculer les efforts de démoulage de toute la gamme.

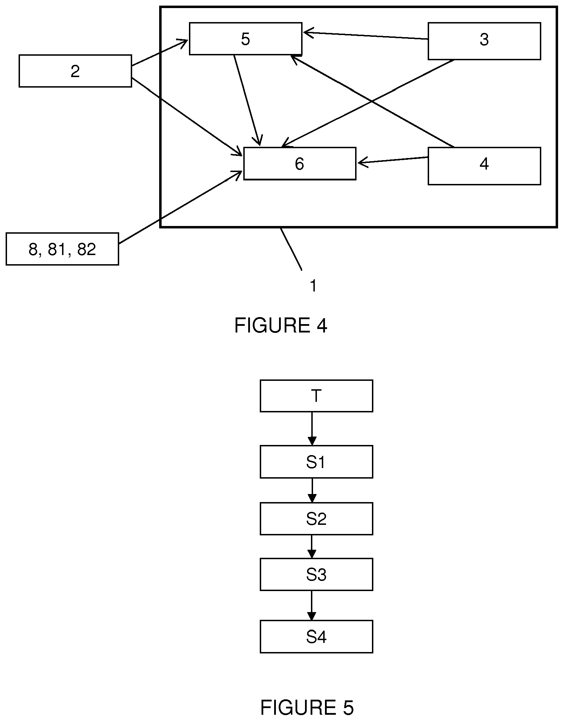

La figure 5 représente l'organigramme d'étapes complémentaires du procédé pour tenir compte du matériau utilisé.

Le procédé complémentaire comporte une étape T de détermination pour un matériau donné de référence (ici, celui utilisé dans les étapes précédentes) des efforts $F_{no}$ de démoulage d'une éprouvette matériau. Le procédé comprend une deuxième étape S1 de définition du matériau à mesurer, suivie d'une étape S2 de détermination de l'effort $F_{ni}$ de démoulage dudit matériau de l'éprouvette matériau.

L'étape suivante S3 consiste à calculer le coefficient d'impact matériau C du matériau à mesurer, ce coefficient C est le rapport des efforts $F_{no}$ de démoulage du matériau de référence et $F_{ni}$ du matériau de l'éprouvette matériau:

$$C = F_{ni} / F_{no}.$$

Ensuite, l'étape S4 est le calcul de l'effort F de démoulage du moule témoin par le matériau à mesurer tel que $F = C \times F_0$.

Pour chaque nouveau matériau à mesurer, il suffira de définir son coefficient d'impact matériau en réitérant le procédé à partir de l'étape S1.

Le dispositif 1 illustré figure 4 comprend une première éprouvette 3, une deuxième éprouvette 4, un dispositif de mesure de l'effort 5, un moyen de calcul 6. A partir des deux éprouvettes 3 et 4, le dispositif 1 va servir à calculer la surface moulante $S_0$ de la première éprouvette 3, la surface moulante $S'_0$ de la deuxième éprouvette 4, à mesurer l'effort

$F_0$ de démoulage de la première éprouvette 3 et l'effort $F'_0$ de démoulage de la deuxième éprouvette 4, puis il va calculer le rapport de la surface moulante $S_0$ de la première éprouvette 3 et $S'_0$ de la deuxième éprouvette 4 pour définir un ratio surfacique éprouvette $R_{se}$ et le rapport de l'effort $F'_a$ de démoulage de la première éprouvette 3 et $F'_0$ de la deuxième éprouvette 4 pour définir un ratio effort éprouvette $R_{fe}$. Le moyen de calcul 6 du dispositif 1 va également calculer la surface $S_1$ d'un moule témoin 2 et le dispositif de mesure de l'effort 5 va mesurer l'effort $F_1$ de démoulage dudit moule témoin 2. Lorsque l'on souhaitera connaitre l'effort $F_m$ de démoulage d'un moule à mesurer 8, il suffira de calculer la surface moulante $S_m$ du moule 8 pour obtenir l'effort $F_m$ de démoulage dudit moule 8 que $F_m = F_1 \times Sm/S_1 \times R_{fe}/R_{se}$.

**Revendications**

1. Procédé d'évaluation d'un effort de démoulage d'un pneu d'un moule consistant à mesurer un effort de démoulage et une surface moulante d'un moule témoin (2), ledit procédé comportant :

   - une étape de choix du moule témoin (2),
   - une étape de calcul de la surface $S_1$ moulante du moule témoin (2),
   - une étape de mesure de l'effort $F_1$ de démoulage du moule témoin (2),
   - une étape de détermination d'une première éprouvette témoin (3) avec une surface moulante $S_0$,
   - une étape de détermination d'une deuxième éprouvette témoin (4) avec une surface moulante $S'_0$, $S'_0$ étant différent de $S_0$,
   - une étape de mesure de l'effort $F_0$ de démoulage de la première éprouvette témoin (3),
   - une étape de mesure de l'effort $F'_0$ de démoulage de la deuxième éprouvette témoin (4),
   - une étape de calcul du rapport de la surface moulante $S_0$ de la première éprouvette (3) et $S'_0$ de la deuxième éprouvette (4) pour définir un ratio surfacique éprouvette $R_{se}$
   - une étape de calcul du rapport de l'effort $F_0$ de démoulage de la première éprouvette (3) et $F'_0$ de la deuxième éprouvette (4) pour définir un ratio effort éprouvette $R_{fe}$
   - une étape de sélection d'un moule à mesurer (8, 81, 82),
   - une étape de calcul de la surface moulante $S_m$ du moule à mesurer (8, 81, 82),
   - une étape de calcul de l'effort $F_m$ de démoulage du moule à mesurer (8, 81, 82) tel que $F_m = F_1 \times Sm/S_1 \times R_{fe}/R_{se}$.

2. Procédé selon la revendication 1 **caractérisé en ce que** le surface moulante $S'_0$ de la deuxième éprouvette (4) est supérieure à la surface moulante $S_0$ du première éprouvette (3).

3. Procédé selon une des revendications précédentes **caractérisé en ce qu'**il comprend :

   - une étape de détermination de l'effort $M_0$ de démoulage du matériau de référence d'une éprouvette matériau,
   - une étape de sélection d'un matériau à mesurer,
   - une étape de détermination de l'effort M de démoulage du matériau de l'éprouvette matériau,
   - une étape de calcul du rapport des efforts $M_0$ de démoulage du matériau de référence et M du matériau de l'éprouvette matériau pour définir un coefficient C d'impact matériau,
   - une étape de calcul de l'effort F de démoulage du matériau tel que $F = C \times F_0$.

4. Dispositif de sélection de la surface moulante d'un moule comprenant un moule témoin **caractérisé en ce qu'**il comprend une première et une deuxième éprouvette (3, 4), un dispositif de mesure d'effort (5) et un moyen de calcul (6) et qu'il utilise le procédé selon une des revendications précédentes.

5. Programme d'ordinateur pour la sélection de la surface moulante d'un moule **caractérisé en ce qu'**il comprend les instructions suivantes :

   - une étape de choix du moule témoin (2),
   - une étape de calcul de la surface $S_1$ moulante du moule témoin (2),
   - une étape de mesure de l'effort $F_1$ de démoulage du moule témoin (2),
   - une étape de détermination d'une première éprouvette témoin (3) avec une surface moulante $S_0$,
   - une étape de détermination d'une deuxième éprouvette témoin (4) avec une surface moulante $S'_0$, $S'_0$ étant différent de $S_0$,
   - une étape de mesure de l'effort $F_0$ de démoulage de la première éprouvette témoin (3),
   - une étape de mesure de l'effort $F'_0$ de démoulage de la deuxième éprouvette témoin (4),
   - une étape de calcul du rapport de la surface moulante $S_0$ de la première éprouvette (3) et $S'_0$ de la deuxième

éprouvette (4) pour définir un ratio surfacique éprouvette $R_{se}$,
- une étape de calcul du rapport de l'effort $F'_0$ de démoulage de la première éprouvette (3) et $F'_0$ de la deuxième éprouvette (4) pour définir un ratio effort éprouvette $R_{fe}$,
- une étape de sélection d'un moule à mesurer (8, 81, 82),
- une étape de calcul de la surface moulante $S_m$ du moule à mesurer (8, 81, 82),
- une étape de calcul de l'effort $F_m$ de démoulage du moule à mesurer (8, 81, 82) tel que $F_m = F_1 \times S_m/S_1 \times R_{fe}/R_{se}$.

**Patentansprüche**

1.  Verfahren zur Bewertung einer Entformungskraft eines Reifens aus einer Form, darin bestehend, eine Entformungskraft und eine abformende Oberfläche einer Kontrollform (2) zu messen, wobei das Verfahren umfasst:

    - einen Schritt der Auswahl der Kontrollform (2),
    - einen Schritt der Berechnung der abformenden Oberfläche $S_1$ der Kontrollform (2),
    - einen Schritt des Messens der Entformungskraft $F_1$ der Kontrollform (2),
    - einen Schritt der Bestimmung eines ersten Kontrollprobestabs (3) mit einer abformenden Oberfläche $S_0$,
    - einen Schritt der Bestimmung eines zweiten Kontrollprobestabs (4) mit einer abformenden Oberfläche $S'_0$, wobei sich $S'_0$ von $S_0$ unterscheidet,
    - einen Schritt des Messens der Entformungskraft $F_0$ des ersten Kontrollprobestabs (3),
    - einen Schritt des Messens der Entformungskraft $F'_0$ des zweiten Kontrollprobestabs (4),
    - einen Schritt der Berechnung des Verhältnisses der abformenden Oberfläche $S_0$ des ersten Probestabs (3) und $S'_0$ des zweiten Probestabs (4), um ein Probestab-Oberflächenverhältnis $R_{se}$ zu definieren,
    - einen Schritt der Berechnung des Verhältnisses der Entformungskraft $F_0$ des ersten Probestabs (3) und $F'_0$ des zweiten Probestabs (4), um ein Probestab-Kraftverhältnis $R_{fe}$ zu definieren,
    - einen Schritt der Auswahl einer zu messenden Form (8, 81, 82),
    - einen Schritt der Berechnung der abformenden Oberfläche $S_m$ der zu messenden Form (8, 81, 82),
    - einen Schritt der Berechnung der Entformungskraft $F_m$ der zu messenden Form (8, 81, 82), so dass $F_m = F_1 \times Sm/S_1 \times R_{fe}/R_{se}$.

2.  Verfahren nach Anspruch 1, **dadurch gekennzeichnet, dass** die abformende Oberfläche $S'_0$ des zweiten Probestabs (4) größer als die abformende Oberfläche $S_0$ des ersten Probestabs (3) ist.

3.  Verfahren nach einem der vorhergehenden Ansprüche, **dadurch gekennzeichnet, dass** es umfasst:

    - einen Schritt der Bestimmung der Entformungskraft $M_0$ des Referenzmaterials eines Materialprobestabs,
    - einen Schritt der Auswahl eines zu messenden Materials,
    - einen Schritt der Bestimmung der Entformungskraft $M$ des Materials des Materialprobestabs,
    - einen Schritt der Berechnung des Verhältnisses der Entformungskräfte $M_0$ des Referenzmaterials und $M$ des Materials des Materialprobestabs, um einen Materialeinflusskoeffizienten $C$ zu definieren,
    - einen Schritt der Berechnung der Entformungskraft $F$ des Materials, so dass $F = C \times F_0$.

4.  Vorrichtung zur Auswahl der abformenden Oberfläche einer Form, umfassend eine Kontrollform, **dadurch gekennzeichnet, dass** sie einen ersten und einen zweiten Probestab (3, 4), eine Kraftmessvorrichtung (5) und ein Berechnungsmittel (6) umfasst, und dass sie das Verfahren nach einem der vorhergehenden Ansprüche verwendet.

5.  Computerprogramm für die Auswahl der abformenden Oberfläche einer Form, **dadurch gekennzeichnet, dass** es die folgenden Befehle umfasst:

    - einen Schritt der Auswahl der Kontrollform (2),
    - einen Schritt der Berechnung der abformenden Oberfläche $S_1$ der Kontrollform (2),
    - einen Schritt des Messens der Entformungskraft $F_1$ der Kontrollform (2),
    - einen Schritt der Bestimmung eines ersten Kontrollprobestabs (3) mit einer abformenden Oberfläche $S_0$,
    - einen Schritt der Bestimmung eines zweiten Kontrollprobestabs (4) mit einer abformenden Oberfläche $S'_0$, wobei sich $S'_0$ von $S_0$ unterscheidet,
    - einen Schritt des Messens der Entformungskraft $F_0$ des ersten Kontrollprobestabs (3),
    - einen Schritt des Messens der Entformungskraft $F'_0$ des zweiten Kontrollprobestabs (4),
    - einen Schritt der Berechnung des Verhältnisses der abformenden Oberfläche $S_0$ des ersten Probestabs (3)

und S'$_0$ des zweiten Probestabs (4), um ein Probestab-Oberflächenverhältnis R$_{se}$ zu definieren,
- einen Schritt der Berechnung des Verhältnisses der Entformungskraft F'$_0$ des ersten Probestabs (3) und F'$_0$ des zweiten Probestabs (4), um ein Probestab-Kraftverhältnis R$_{fe}$ zu definieren,
- einen Schritt der Auswahl einer zu messenden Form (8, 81, 82),
- einen Schritt der Berechnung der abformenden Oberfläche S$_m$ der zu messenden Form (8, 81, 82),
- einen Schritt der Berechnung der Entformungskraft F$_m$ der zu messenden Form (8, 81, 82), so dass F$_m$ = F$_1$ x Sm/S$_1$ x R$_{fe}$/R$_{se}$.

## Claims

1. Method for evaluating a force for demoulding a tyre from a mould, consisting in measuring a force for demoulding from and a moulding surface area of a control mould (2), said method including:

   - a step of choosing the control mould (2),
   - a step of calculating the moulding surface area S$_1$ of the control mould (2),
   - a step of measuring the force F$_1$ for demoulding from the control mould (2),
   - a step of determining a first control test specimen (3) with a moulding surface area S$_0$,
   - a step of determining a second control test specimen (4) with a moulding surface area S'$_0$, S'$_0$ being different from S$_0$,
   - a step of measuring the force F$_0$ for demoulding from the first control test specimen (3),
   - a step of measuring the force F'$_0$ for 1demoulding from the second control test specimen (4),
   - a step of calculating the ratio of the moulding surface area S$_0$ of the first test specimen (3) and S'$_0$ of the second test specimen (4) so as to define a test specimen surface area ratio R$_{se}$,
   - a step of calculating the ratio of the force F$_0$ for demoulding from the first test specimen (3) and F'$_0$ for demoulding from the second test specimen (4) so as to define a test specimen force ratio R$_{fe}$,
   - a step of selecting a mould (8, 81, 82) to be measured,
   - a step of calculating the moulding surface area S$_m$ of the mould (8, 81, 82) to be measured,
   - a step of calculating the force F$_m$ for demoulding from the mould (8, 81, 82) to be measured such that F$_m$ = F$_1$ x Sm/S$_1$ x R$_{fe}$/R$_{se}$.

2. Method according to Claim 1, **characterized in that** the moulding surface area S'$_0$ of the second test specimen (4) is greater than the moulding surface area S$_0$ of the first test specimen (3).

3. Method according to either of the preceding claims, **characterized in that** it comprises:

   - a step of determining the force M$_0$ for demoulding the reference material from a material test specimen,
   - a step of selecting a material to be measured,
   - a step of determining the force M for demoulding the material from the material test specimen,
   - a step of calculating the ratio of the forces M$_0$ for demoulding the reference material and M for demoulding the material from the material test specimen so as to define a coefficient C of material impact,
   - a step of calculating the force F for demoulding the material such that F = C x F$_0$.

4. Device for selecting the moulding surface area of a mould comprising a control mould, **characterized in that** it comprises a first and a second test specimen (3, 4), a force measuring device (5) and a calculating means (6) and **in that** it uses the method according to one of the preceding claims.

5. Computer program for selecting the moulding surface area of a mould, **characterized in that** it comprises the following instructions:

   - a step of choosing the control mould (2),
   - a step of calculating the moulding surface area S$_1$ of the control mould (2),
   - a step of measuring the force F$_1$ for demoulding from the control mould (2),
   - a step of determining a first control test specimen (3) with a moulding surface area S$_0$,
   - a step of determining a second control test specimen (4) with a moulding surface area S'$_0$, S'$_0$ being different from S$_0$,
   - a step of measuring the force F$_0$ for demoulding from the first control test specimen (3),
   - a step of measuring the force F'$_0$ for demoulding from the second control test specimen (4),

- a step of calculating the ratio of the moulding surface area $S_0$ of the first test specimen (3) and $S'_0$ of the second test specimen (4) so as to define a test specimen surface area ratio $R_{se}$,
- a step of calculating the ratio of the force $F'_0$ for demoulding from the first test specimen (3) and $F'_0$ for demoulding from the second test specimen (4) so as to define a test specimen force ratio $R_{fe}$,
- a step of selecting a mould (8, 81, 82) to be measured,
- a step of calculating the moulding surface area $S_m$ of the mould (8, 81, 82) to be measured,
- a step of calculating the force $F_m$ for demoulding from the mould (8, 81, 82) to be measured such that $F_m = F_1 \times Sm/S_1 \times R_{fe}/R_{se}$.

FIGURE 1

FIGURE 2

FIGURE 3

FIGURE 4

FIGURE 5

**RÉFÉRENCES CITÉES DANS LA DESCRIPTION**

**Documents brevets cités dans la description**

- JP 2012096462 A
- JP 2012006287 B